# EUROPEAN PATENT APPLICATION

(11) **EP 3 528 151 A1**
(43) Date of publication of application: **21.08.2019**
(21) Application number: 18305158.0
(22) Date of filing: 15.02.2018
(51) Int. Cl.: G06F 21/31, G06F 21/36

(54) **METHOD AND APPARATUS FOR USER AUTHENTICATION**

(71) Applicant: THOMSON LICENSING, 92130 Issy les Moulineaux (FR)
(72) Inventor: ALLEAUME, Vincent, 35576 Cesson-Sévigné (FR); JOUET, Pierrick, 35576 Cesson-Sévigné (FR); LUO, Tao, 35576 Cesson-Sévigné (FR)
(74) Representative: Huchet, Anne

(57) **Abstract**

A method for determining a user interface authentication set comprising at least one mandatory authentication element, and at least one of a failure authentication element or a neutral authentication element is disclosed. The method comprises receiving (20) user inputs for selecting at least one authentication element to add to said at least one user interface authentication set, determining (21) whether said at least one authentication element selected is a mandatory authentication element for validating a user authentication, or whether said at least one authentication element is a failure authentication element triggering failure of user authentication when said at least one authentication element is selected by a user during user authentication, or whether said at least one authentication element is a neutral authentication element being inconsequential to user authentication when said at least one authentication element is selected by a user during user authentication. A method for authenticating a user using the user interface authentication set is also disclosed.

## Description

### 1. Technical field

A method and an apparatus for user authentication are disclosed.

### 2. Background art

Most of common user interaction sessions executed on multimedia devices such as computers, smartphones and tablets are usually starting with an authentication procedure, to check the user's rights to initiate the intended action. For instance, in such user interaction session, the user may want to access content belonging to his/her digital account(s), such as files, or to proceed to a payment to consume a temporary (such as video on demand) or permanent service (such as purchasing digital song(s)...), or to subscribe to a new service, or to post comments or to consult social media, etc...
Most of authentication procedures are still relying on password based approach. On devices equipped with real keyboard or even a mouse device, that authentication procedure is usually done straight forward, without too much time waste, but still with an inherent poor privacy context (when done in a crowded or public place for instance).
However, on recent devices including devices with limited user input means, such as smart watches or augmented reality headsets and virtual reality headsets, the user interaction when it's comes to password based authentication is much more challenging, starting with the procedure to enter each character (and/or number) in case of textual password, which usually involves a virtual keyboard display plus gesture or voice based selection.

Therefore, there is a need for a new method for user authentication.

### 3. Summary

According to an aspect of the present principle, a method for determining at least one user interface authentication set is disclosed. The method, being performed by at least one processor, comprises:
- receiving user inputs for selecting at least one authentication element to add to said at least one user interface authentication set,
- determining whether said at least one authentication element selected is a mandatory authentication element for validating a user authentication, or whether said at least one authentication element is a failure authentication element triggering failure of user authentication when said at least one authentication element is selected by a user during user authentication, or whether said at least one authentication element is a neutral authentication element being inconsequential to user authentication when said at least one authentication element is selected by a user during user authentication,
- adding said at least one authentication element selected to said at least one user interface authentication set.

### 4. Brief description of the drawings

Figure 1 illustrates an example of a CAPTCHA text,
Figure 2 illustrates an exemplary method for determining a user interface authentication set according to an embodiment of the present principle,
Figure 3 illustrates an exemplary method for authenticating a user according to an embodiment of the present principle,
Figure 4 illustrates an exemplary audio element shown as audio graph according to an embodiment of the present principle,
Figure 5A illustrates an exemplary user interface authentication set according to an embodiment of the present principle,
Figure 5B illustrates an exemplary user interface authentication set according to another embodiment of the present principle,
Figure 6 illustrates an exemplary time line presentation of media elements for user authentication acccording to an embodiment of the present principle,
Figure 7A-B illustrate exemplary user interface authentication elements selected by a user for authenticating to a device, according to embodiments of the present principle,
Figure 8 illustrates an exemplary apparatus for determining a user interface authentication set and/or authenticating a user, according to an embodiment of the present principle.

### 5. Description of embodiments

Regarding emerging new products with limited capabilities regarding usual characters' input, it appears that the classic authentication based on character's password entering is not convenient in a day-to-day life, specifically for devices with lack of convenient keyboard, such as augmented reality (AR) or Virtual Reality (VR) headsets, but also autonomous smart watches, not attached to a smartphone.
User authentication procedure on such devices is much more time consuming, usually coming from the virtual keyboard layout usage, as it usually requires switching from mode to mode, like switching from letters to numeric or special characters, and also from the need for the user to accurately select individually each of the password character. Even if there, the privacy seems much preserved in that augmented display, or individual private display context.

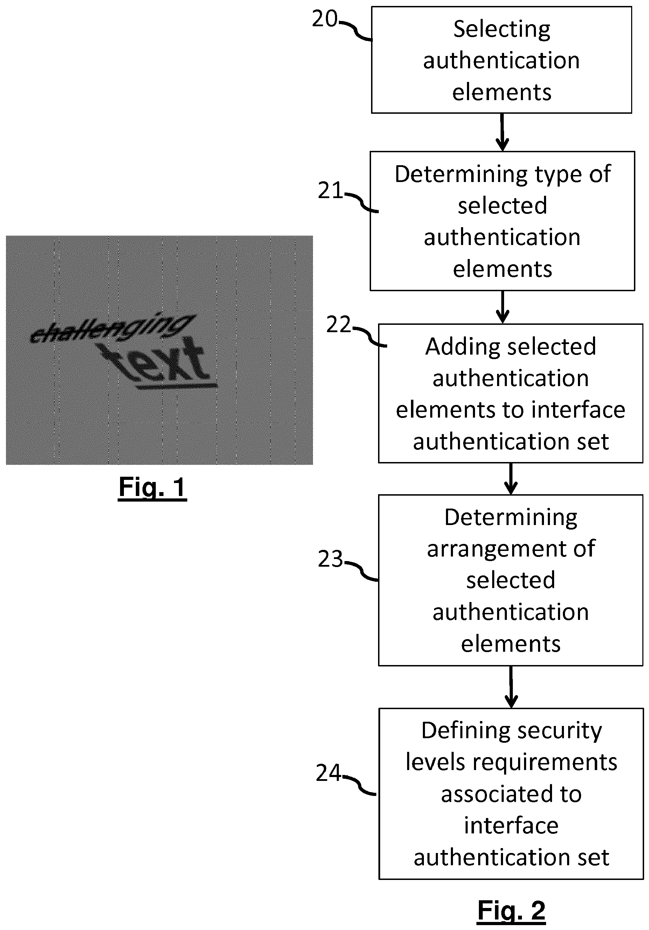

Other authentication systems may be used, such as fingerprint recognition based system or iris recognition approach. But, such authentication systems require some specific hardware embedded in the device with which the user wants to authenticate.
Authentication procedure is even becoming even more tedious, as password security requirement increases which results in even more complex and/or longer password requirement.
Beside these password based authentication procedures, there is also some verification procedures that are typically seen on the web, when it comes to user comment(s) validation for instance, to check that a user is not a robot (also known as a bot) trying to submit data entries in an automatic approach.
Such a verification method is usually text based and consists in displaying some distorted text that only a human is expected to transcript correctly as validation step. FIG. 1 illustrates an example of such text, also called CAPTCHA. An audio based counterpart version also exists, replacing the distorted text challenging input.
But in both cases, the user needs to enter, again using real or virtual keyboard, some characters' sequence, still being possibly a tedious task for users equipped with headset devices for instance.
Some recent alternative to text -only- based check procedures (for both verification and authentication procedure) are methods using an image(s) based approach.
For verification procedures for instance, the verification step could be an image filtering procedure, where a sequence of image(s) is displayed to the user, with the task to select (or unselect) image(s) containing a specific object or context that is indicated during that step. For instance, a set of image(s) may be displayed, some containing some road signs that the user needs to (de)select to validate the verification step. This heavily assumes that a (software) robot is not able to do that same task, which is not so obvious with respect to the latest progress in deep learning algorithms that a bot could take benefit.

With higher security requirements on password (long sequence of characters, use of various and special characters), the task of inputting a password becomes a long, tedious and challenging task for the users.
Instead of complex characters sequences in authentication procedures, the present discosure proposes an authentication method that replaces the use of classical textual passwords with media passwords composed of media elements, such as image(s) elements, video(s) elements, audio(s) elements, or combination of these as validating elements during the authentication procedure.

In the case of users wearing small (smart watches) or third-parties hidden display (AR or VR headset), high privacy is thus ensured to the user proceeding the authentication procedure, even if he is being closely watched by a malicious observer.
According to an embodiment of the principles, different security levels can be set by the user or system administrator with respect to the device used for performing the authentication procedure, or to the user's or device's location (but not limited to these example criteria), for providing tuning of balance between security and practicability of the authentication procedure.

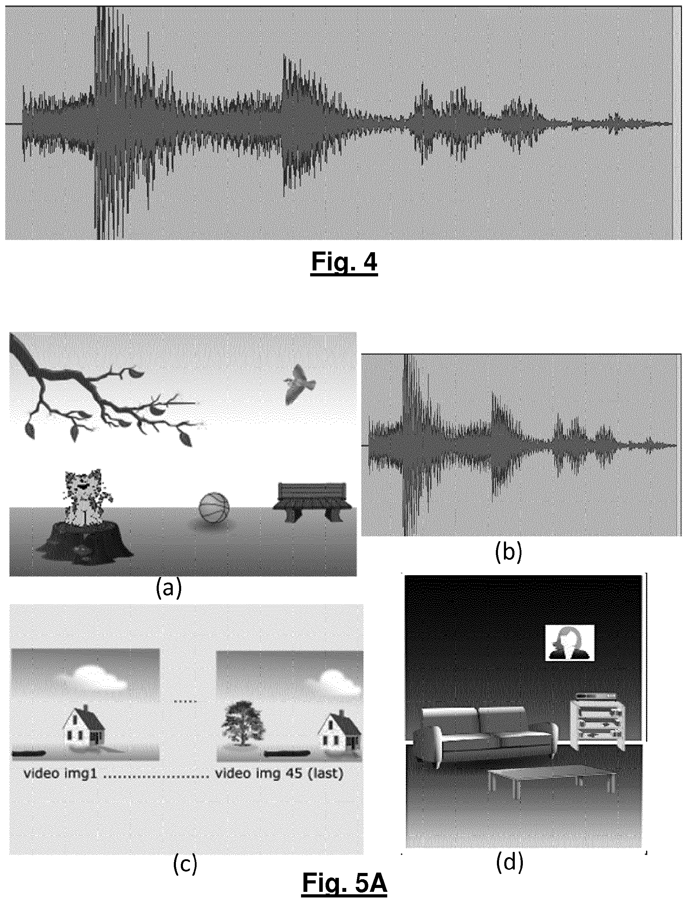

Figure 2 illustrates an exemplary method for determining a user interface authentication set according to an embodiment of the present principle. The user interface authentication set comprises authentication elements that a user selects for validating an authentication procedure. In the following, an authentication element may correspond to a media element, such as image(s), video(s), audio elements, or any other media file that could be used, but also to a location in time and/or space inside a media element.
In the case of an audio element, the audio element can be presented to the user either as an audio signal played by the device or as a visual audio graph representation such as the one illustrated in fig. 4. In that case, selecting a location in time in the audio file corresponds to select a spatial location of the visual audio graph.
The user interface authentication set comprises mandatory authentication elements selected by the user that form the media password used for authenticating the user on a device and also additional information allowing to improve password security.
Such additional information may comprise information indicating a time or a spatial arrangement of the authentication elements forming the password.
The additional information may also comprise failure authentication elements that when selected by the user during the authentication procedure trigger failure of the authentication procedure. Such a failure authentication element may correspond to media element and/or location(s) in time and space inside selected media elements.
The additional information may also comprise neutral authentication elements that, when selected by the user during the authentication procedure, have no impact on the authentication procedure. Such a neutral authentication element may correspond to media element and/or location(s) in time and space inside selected media elements. Such neutral authentication elements allow to render more difficult the reproduction of the password by a spy.
The method for determining a user interface authentication set may be performed by any user device equipped with a processor, memory and user interaction means, such as a Personal Computer, a tablet, a smart watch, VR or AR headsets, etc...

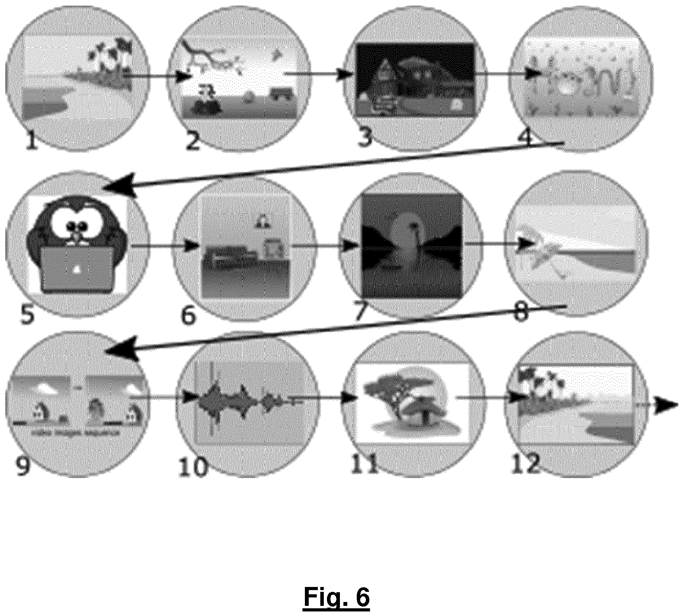

Referring to fig. 2, in step 20, user inputs for selecting at least one authentication element to add to the user interface authentication set, are received by the device performing the method. Such user inputs could be received using any user interaction means provided by the device. For examples, user inputs can be: clicking on displayed media elements, or gesture tap on a headset with gesture recognition, or taping on smart watch screen if touch sensitive, or eye-gaze interaction....
For instance, in step 20, media elements are displayed to the user and the user selects some of the displayed media elements.
An exemplary presentation mode to the user for selecting media elements to compose or submit his media password, could be a simple list of media elements, such as the one illustrated in fig. 6. The presentation of fig. 6 is suitable for presenting media elements one by one on a small screen device, such as a smart watch.
In the case of presentation in the form of a list, the user could select each media element one by one, until he validates the end of the selection step. That presentation could be done through one global list or any graphical layout, but also through multiple succeeding pages of elements, that the user could navigate through.
In a more convenient way for small screen devices for instance, that presentation could be instead be driven by time, and the user would pick each media element once displayed (amongst all candidates), and then providing any additional authentication criteria if required, as explained below. That extra criteria prompt could be done immediately after a new item is picked / selected by the user, or only after all the media element are first selected by the user, in another embodiment (but not limited to these).
According to a variant, the mode presentation of the media elements for selection by the user is adapted to the device performing the method.
For example, fig. 5A illustrates 4 media elements (a-d) selected by a user as authentication elements. The media elements (a) and (d) are images, the media element (b) is a visual audio graph representative of an audio signal, for instance a song file belonging to the user, and the media element (c) is a video file.
In step 21, it is determined the type of the authentication elements selected by the user. In this step, for each selected authentication element, the user sets whether the authentication element is a mandatory authentication element for validating a user authentication, or whether the authentication element is a failure authentication element triggering failure of user authentication, or whether the authentication element is a neutral authentication element. For example, in the example of fig. 5A, the user has selected the 3 following media files for composing its media password:
- A personal image from its gallery, for instance showing his cat on a cut tree in its garden (fig. 5A(a)),
- A short audio file of a recorded sentence (fig. 5A(b)), for instance a 3 second audio capture,
- A short video sequence of its favorite film (fig. 5A(c)), for instance a 5 seconds videos of a moving view traveling from right to left, finally showing a tree not visible at the start of the view traveling.

In other words, the three media elements of fig. 5A (a, b, c) are determined by the user as mandatory authentication elements. In the example given here, the user also sets the media element (d) of fig. 5A as a failure authentication element.

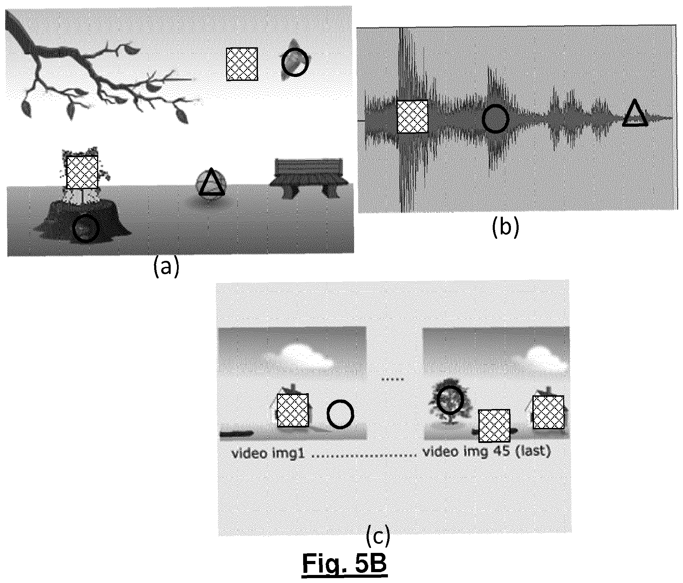

According to a variant, as mentioned above, the user can also provide during password creation some additional media element success/failure selection criteria, these criteria being possibly specific to each media element, or for a combination of more element (if of same type, for instance, or same duration, or not).
According to this variant, in step 21, the user also indicates for each mandatory media element, specific area inside the media element and indicates whether the selected specific area is a mandatory, failure or neutral authentication element.
For selecting those specific area, the user could simply touch or click on the displayed media representation at a mark location, but also in a more elaborate approach some specific gesture or any other type of selection (double click, double tap, drawing a cross sign centered on that location, etc....).
An example of another user interface authentication set is illustrated in fig. 5B wherein success/failure criteria have been associated to mandatory media elements. For example, as illustrated in fig 5B(a), the user indicates the areas inside the images which are mandatory and shall be selected (represented by circles in fig. 5B) and the areas inside the images which are failure authentication element and shall not be selected during user authentication procedure (represented by square cross-filled in fig. 5B). In the example, of fig. 5B(a), the base of the tree and the bird are mandatory authentication element, the cat and the sky are failure authentication element. Optionally, the user can also indicate neutral areas inside the media element (represented as triangle in fig. 5B).
In the example of the audio media element of fig. 5B(b), the user could specify a success criteria to the recorded audio element, being that the authenticating user shall achieve a select action during the second half of the audio (circle on fig. 5B(b)), and as opposite a selection in the first half period is an authentication failure criteria (cross-filled square on fig. 5B(b)). Note that the audio could be also not provided as a real audio file needing playback (which then could be bad for privacy reasons) but as a frequency shaped temporal view (i.e. an audio graph), like the example of fig. 5B(b)). In this example, the user also sets a neutral area at the end of the audio file (triangle on fig. 5B(b)).

In the example of the video media element of fig. 5B(c), the user specifies that doing a select action on the point to the right of the house, as the play of that video begins, would be a mandatory criteria for authentication (circle in img1 of fig. 5B(c)). Also, selection of the tree at the end of the video is a mandatory criteria (circle in img45 of fig. 5B(c)), and selection of the house at any moment in the video is a failure criteria (cross-filled square in img1 and img45 of fig. 5B(c)).
In step 22, the selected authentication elements, corresponding types (mandatory, failure, neutral), and associated success/failure criteria (mandatory/failure/neutral areas in the media elements) are added to the user interface authentication set and stored in memory.
According to a variant, in step 23, it is determined an arrangement of the selected mandatory authentication elements in a mandatory order. That is according to this step, during the authentication procedure, the mandatory authentication elements shall be selected in that predetermined order to assume that entry order as a full success regarding that mandatory order criteria. In the example of fig.5A, media elements have to be selected in the order: a-b-c during a user authentication procedure.
According to this variant, any other order of media element selection during the authentication procedure would trigger failure of the authentication procedure. It is noted that this step is optional and may depend on the security level associated to the user interface authentication set if any, as discussed below.
According to a variant, in step 24, security level requirements are defined and associated to the user interface authentication set. Such step is optional and the user interface authentication set may be used without any security level requirements set defined. In that case, by default, it is assumed that the user interface authentication set is associated to the highest level of security level (meaning that authentication success requires selection of all mandatory authentication elements in the mandatory order, and no failure authentication elements being selected).
According to a variant, several security level sets of requirements can be defined and associated to the user interface authentication set. According to an embodiment of the present principle, security level sets can be determined as a function of the devices used for user authentication.
For examples, for personal/private devices, such as smart watches or mobile phones, low level security requirements can be set, while for shared devices or easy to spy devices, high level security requirements can be set.
For example, a high security level set requirements may comprise the following conditions to be satisfied when the user performs the authentication procedure:
- all mandatory authentication elements shall be selected in a predetermined order,
- no failure authentication element shall be selected,
- neutral authentication element may be selected,
- mandatory locations in space and time inside mandatory media element shall be selected,
- no failure locations in space or time inside media element shall be selected.
Other level of security may be defined dynamically when the authentication procedure is performed. The hardware information of the device used for authentication procedure could be first collected, e.g. the size of screen and the sensors to be used for user interaction, followed by a determination of a suitable level of security to verify the user's authentication input in function of the device used.
According to another variant, the user -or a security administrator- can define and control the level of security by letting him/her decide for instance what level of detail is required to validate or reject the media password being entered, depending on the device it is entered from, but not limited to these two examples.
This option in level of security set assumes that when the media password is created, the highest level of details, that is the parameters of the user interface authentication set, is provided, being for instance some or composition of:
- The order in which the media element(s) are being added to the media password being built,
- Some specific parameter(s) of the media element being added, for instance:
   ∘ Some specific(s) area(s) location(s) inside the selected image,
   ∘ Some specific time location(s) in an audio file, or some space location(s) into an audio file presentation,
   ∘ Some specific location(s) (in space and time) in a video

During the media password creation, different security levels are defined for that same media password.
The type of security levels and related authentication procedure checks could then be for instance, but not limited to the examples given below:
- Low level security example of authentication success:
   ∘ The authentication system presents to the authenticating user a set of media(s) element(s) that globally contains a parametric number of various media(s) (of various type(s)), including all the media element(s) that compose the user's media password,
   ∘ The user selects some elements in the list (possibly a few more elements than necessary considered as having no effect on the result of the user authentication procedure, but at least including the mandatory authentication media elements composing its media password, that selection being possibly not done in the same original selection order used when defining the media password)
   o The authentication system simply checks the user has selected at least all the mandatory authentication media elements that belongs to its media password, and set the authentication procedure as being successful.
- Medium level security for authentication success:
   o The authentication system presents to the authenticating user a set of media(s) element(s) that globally contains a parametric number of various media(s) (of various type(s)), including all the media element(s) that compose the user's media password,
   ∘ The user selects all the mandatory authentication media elements belonging to its media password, and only these, in the same selection order that the order they were added to the media password,
   ∘ The authentication system checks the user has selected all (and only) the media elements that belongs to its media password, checks the order of selection is matching the order of insertion used during media password creation, and only then set the authentication procedure has a success.
- High level security for authentication success:
   ∘ The authentication system presents to the authenticating user a set of media(s) element(s) that globally contains a parametric number of various media(s) (of various type(s)), including all the media element(s) that compose the user's media password,
   ∘ The user selects all the mandatory authentication media elements belonging to its media password, and only these, in the same selection order that the order they were added to the media password,
   ∘ For each media element(s) the user has selected, he/she also specifies space or time location(s) in some of the mandatory authentication elements, to meet any success criteria defined (in our example of fig. 5B(a) the user selecting the image with tree and cat would then also select the bird and the tree base in the image, but NOT the cat, defined as a failure event when selected, for instance)
   ∘ The authentication system checks the user has selected all (and only) the mandatory media elements that belongs to its media password, checks the order of selection is matching the order of insertion used during media password creation, and all the success criteria, none of the failure criteria, and only then set the authentication procedure has a success.

According to a variant, in any one of the above defined security levels requirements, when authenticating, the user can also select any neutral authentication elements at any time in the authentication procedure, in addition to the mandatory authentication elements without impacting the on-going authentication procedure.

Depending on the will of the user, the determined user interface authentication set could be valid from a single device only, or to a wide range of devices which are network connected or not. The only practical requirement that controls this parameter is the accessibility (through network or otherwise on local storage of the device) of each media element composing the media password.
For each device not connected to a network on which the user wants to use the same media password in an authentication procedure, however, the creation or change of the media password will need to be repeated. Before creating or changing the password on these devices, the user must ensure these devices have access to the media elements of the new password.

The determined user interface authentication set could also be used as a shared password on connected devices having access to the same user's medias (typically his/her own image(s), video(s), audio(s)), but not limited to, as also some public media(s) element(s) could be used during the media password generation.
To avoid the user to have to redo the whole creation process on every not connected devices, some export processes could be proposed, similarly as it is possible to generate reusable configuration file(s) using any descriptive format (such as XML, JSON) to help regenerating exactly the same media password on isolated devices having some external storage access (USB key storage for instance). This configuration file could include both media file(s) element(s) (or references to) and related details, to automatically create it on the device where the configuration file is provided.
Besides the option of copying the configuration file across unconnected devices, that file could be updated automatically through a server for network connected devices.

Adding some extra criteria as success or failure condition is increasing the level of security of the global media password, and the balance between the number of media elements composing the media password and the number of extra criteria added to each media element is helping the user to assign a level of security for the later authentication procedure(s) based on this media password.
Purpose of failure authentication elements, or forbidden marks, is to help legal user from preventing illegal media password reproduction from a spying person. In case a malicious user is trying to approximately enter a media password after he has spied the legal user while entering its password, if he wrongly presses an area defined as forbidden (failure area) during media password setup, then the whole authentication attempt may set as failed (depending on the security settings).
So, to make even harder the copy by spying of its password, the legal user may simply, while entering its media password, press purposely some non-marked area located very closely to the forbidden marks he has defined, and even if this behavior will not make his own authentication attempt to fail, as these areas are marked as neutral, they are not marked as mandatory for success, and also not marked as failure case for authentication (even if close from such areas), then a spying person would surely be unable to detect precisely the useful select locations from the one being required, the one being forbidden (amongst some being obfuscating).
When presentation of media element is done following a time line, the lifetime of each defined failure/mandatory criteria could also be a parameter, with respect to the duration of presentation of the related element media. For instance, a success requirement could be to select a specific item, but only after a moment it was presented to the user. For instance, in the example of the video of fig. 5A(C), the user could have to select the house, but only in the second half of the video media element, to get the success criteria being validated, for instance the house shall be selected only when the tree becomes visible. Thus, according to this variant, in the user interface authentication set, a time parameter is associated to the location of the mandatory media element that shall be selected.

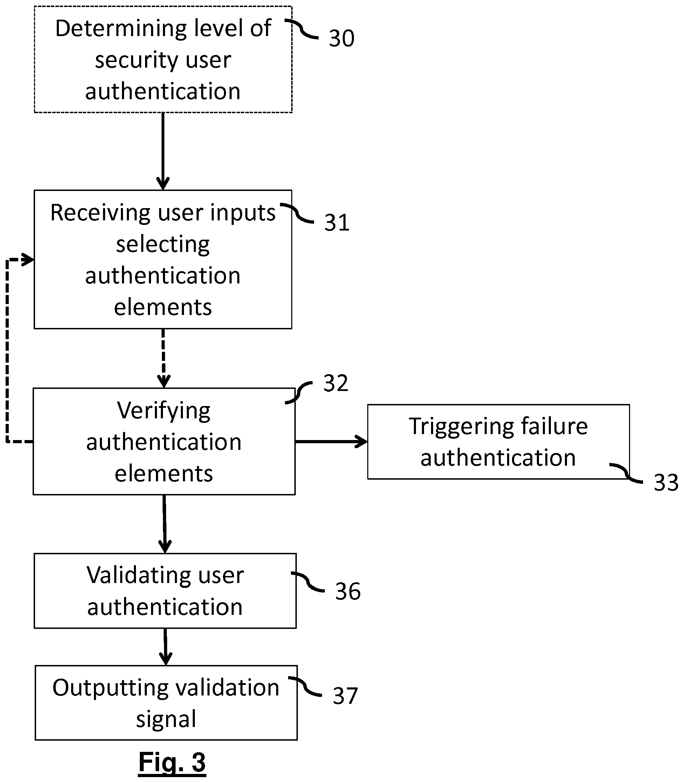

Figure 3 illustrates an exemplary method for authenticating a user according to an embodiment of the present principle. The authentication procedure is thus performed by the device to which the user wants to have access.
The result of the authentication procedure based on a user interface authentication set depends on the level of security used for the authentication procedure. According to an embodiment of the present principle, the level of security applied to the authentication procedure can be determined adaptively by detecting the type of device that engages the authentication procedure.
In step 30, a level of security for the on-going user authentication is determined. Such a step may be optional, as only one level of security may be defined for the user interface authentication set.
When different sets of security level requirements have been defined for a same user interface authentication set, the level of security is determined as a preliminary step of the user authentication procedure. The level of security may be determined dynamically by the device receiving the security level requirements to satisfy from a server, or the security level requirements may be stored in a memory of the device with the user interface authentication set.
In the example described below, the user interface authentication set used for authentication is the one illustrated in fig. 5B.

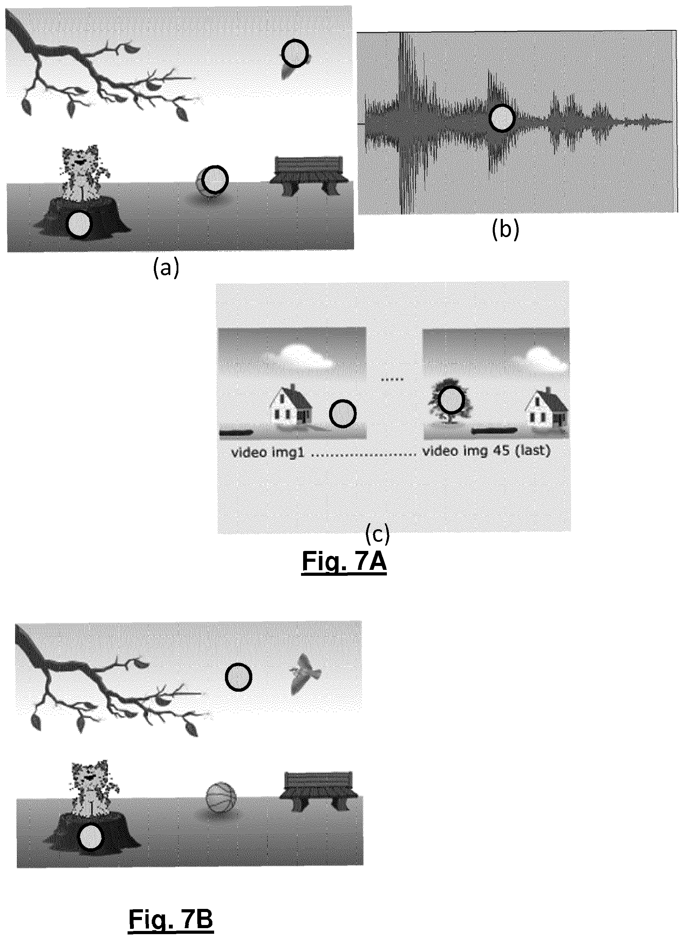

In step 31, user inputs selecting authentication elements among authentication elements presented to a user that are received by the device on which the user wishes to authenticate. The presentation of the media elements to the user can be done in a similar manner as discussed above in the method for creating the media password in reference with fig. 2. According to a variant, the mode presentation of the media elements for selection by the user is adapted to the device performing the method.
In step 31, the user may also be invited to select locations in space and/or time inside the selected media element. For instance, at step 31, the user has provided a user interface authentication set as illustrated in fig. 7A. The user has selected the three media elements (a,b, and c) and selected the area shown by grey circles inside those media elements.
In step 31, after each user input selecting an authentication element31 (media elements or selected areas inside a media element), it is determined if the selected authentication element is a mandatory authentication element, or a failure authentication element, or a neutral authentication element being inconsequential to user authentication. Such a determination is done according to the information associated to the authentication element and which is stored in the user interface authentication set, if the selected element is an authentication element of the user interface authentication set.
At step 31, if the selected authentication element is a failure authentication element, a number of selected authentication element being failure authentication element is increased. If the selected authentication element is a mandatory authentication element, a number of selected authentication element being mandatory authentication element is increased.
If the selected authentication element is a neutral authentication element, nothing has to be done, as neutral authentication elements have no effect on the user authentication procedure.
When the selected authentication element is not an authentication element from the user interface authentication set, the user input is considered as a user error in the selection of the mandatory element. Such an error can be taken into account by considering that a mandatory authentication element is missing, and thus the number of selected mandatory authentication element is decreased.
In another variant, the error can be taken into account by counting the number of errors and triggering failure authentication when the number of errors is above a predetermined tolerance-to-error value.

In step 32, authentication elements are verified. In this step, the number of failure authentication elements is checked, as well as the number of mandatory authentication elements. If the number of user errors is being counted separately, the number of user errors is also checked.
According to the variant used, this step may be performed when the user input selection has ended or each time a user input selects an authentication element.
In the latter case, depending on the level of security used for the user authentication procedure, if a failure authentication element is selected by the user, failure authentication may be triggered immediately following the user selection of the failure authentication element is no tolerance to errors is accepted.
Also, validation of the user authentication may be triggered when a minimum number of mandatory authentication elements has been selected.
At step 32, when a tolerance to errors is admitted, it is thus verified if the number of selected authentication element being failure authentication element is below a predetermined tolerance-to-error value. This value could be specific to this step, or shared with other check steps discussed below.
For instance, the predetermined tolerance-to-error value could be the global number of errors accepted during the whole current authentication process, an error being a mandatory element selection being forgotten, or a failure element being selected during that same process.
For security concern and for keeping authentication procedure mostly effective, that predetermined tolerance-to-error value should be kept small, typically close to zero, compared to some criteria, such as the total number of mandatory elements that must be selected to initially consider success.
When the tolerance-to-error value is non-zero, the verification at step 32 allows tolerating a few user's errors in the authentication procedure, but these errors must be kept below that tolerance-to-error value to still envisage the current flawed authentication procedure as a successful one.
The tolerance-to-error value of a check step may be set accordingly to the level of security used for the on-going authentication procedure. For example, for the highest level of security, the tolerance-to-error value may be zero, that is no tolerance to errors is allowed.
If at step 32, the number of selected authentication element being failure authentication element is above or equals to the predetermined tolerance-to-error value, failure of authentication element is triggered at step 33. At this step, the authentication procedure ends, or the user may be given another chance to validate authentication by re-doing the whole selection process from step 31.

At step 32, it is verified if the number of selected authentication element being mandatory authentication element is reached, minus another predetermined tolerance-to-error value. Here again, this threshold tolerance-to-error value can be used according to the level of security.
For example, in case of high security level, all mandatory elements shall be selected by the user. In that case, the tolerance-to-error being 0, no miss in selecting a mandatory authentication element would be tolerated.
For lower level of security, the tolerance-to-error value may be slightly relaxed for any or all checks performed. For instance, these values may be defined with respect to the total number of mandatory elements that must be selected to validate authentication. For instance, a 5% error tolerance would allow at most one error selection amongst mandatory elements for a media password having a length of 20 mandatory authentication elements.
In case, the number of errors is counted separately from the number of mandatory authentication elements or from the number of failure authentication elements, the number of errors is also verified with respect to a tolerance-to-error value, as explained above. According to a variant, and depending on the requirements of the level of security associated to the authentication procedure, it is verified the arrangement of the mandatory authentication elements, again with an optional tolerance-to-error value (0 or typically close to 0), possibly allowing a few errors in the mandatory elements selection order defined for the authentication success. For example, with an optional tolerance-to-error value to 0, it is verified if the media elements have been selected by the user in the exact same order as during the media password generation.
For instance, with error tolerance set to 0 to any check steps (highest security case), according to the user interface authentication set defined with fig. 5A, if at step 31, the media presentation is done with the list illustrated on fig. 6, the user shall select the media elements from fig. 6 in the following order: 2, 10, 9.
Depending on the mode presentation and the size of the device's screen, the elements may be presented multiple time to the user to allow him to select the mandatory authentication elements in the wanted order. For instance, when the mode presentation imposes to present the elements to the user one by one, for example as in fig.6 in case of presentation on the screen of a smartwatch, media elements are presented one by one, in order to select media element 10 before media element 9, the list has to be presented at least twice.

As the media element 6 is a failure authentication element, this media element shall not be selected here, yielding otherwise to authentication failure.
Depending on the security level requirements, the order of selection of the mandatory areas inside the mandatory elements could also be checked.

If the arrangement of the mandatory authentication elements is not satisfied, failure of authentication element is triggered, and procedure reaches failure case (step 33). Otherwise, the process continues to step 36, wherein user authentication is validated.
According to an embodiment of the present principle, at step 37, a validation signal is outputted to the user. For example, a visual signal is displayed on a screen or an audio signal is emitted by the device.
In the case of the authentication elements selected by a user during an authentication procedure illustrated on fig. 7A, based on the user interface authentication set illustrated on fig. 5B, user authentication is validated as all mandatory authentication elements, no failure authentication element and one neutral authentication element have been selected.
In the case where the user selects the areas as illustrated in fig. 7B for the media element (a) from fig. 7A, the authentication procedure may lead to a failure depending on the level of security as one failure authentication element (selection of the sky) has been selected, and the bird being a mandatory authentication element has not been selected.

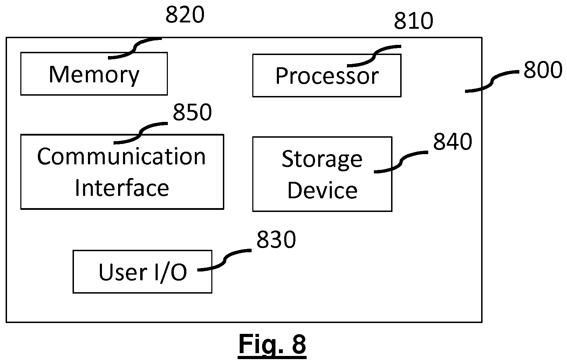

Figure 8 illustrates an exemplary apparatus for determining a user interface authentication set according to an embodiment of the present disclosure and/or for authenticating a user using a user interface authentication set. FIG. 8 illustrates a block diagram of an exemplary system 800 in which various aspects of the exemplary embodiments may be implemented. The system 800 may be embodied as a device including the various components described below and is configured to perform the processes described above. Examples of such devices, include, but are not limited to, mobile devices, personal computers, laptop computers, smartphones, tablet computers, digital multimedia set top boxes, digital television receivers, personal video recording systems, connected home appliances, and servers. The system 800 may be communicatively coupled to other similar systems, and to a display via a communication channel.
Various embodiments of the system 800 include at least one processor 810 configured to execute instructions loaded therein for implementing the various processes as discussed above. The processor 810 may include embedded memory, input output interface, and various other circuitries as known in the art. The system 800 may also include at least one memory 820 (e.g., a volatile memory device, a non-volatile memory device). The system 800 may additionally include a storage device 840, which may include non-volatile memory, including, but not limited to, EEPROM, ROM, PROM, RAM, DRAM, SRAM, flash, magnetic disk drive, and/or optical disk drive. The storage device 840 may comprise an internal storage device, an attached storage device, and/or a network accessible storage device, as non-limiting examples.

Program code to be loaded onto one or more processors 810 to perform the various processes described hereinabove may be stored in the storage device 840 and subsequently loaded onto the memory 820 for execution by the processors 810. In accordance with the exemplary embodiments, one or more of the processor(s) 810, the memory 820, and the storage device 840, may store one or more of the various items during the performance of the processes discussed herein above, including, but not limited to the media elements for selection, user interface authentication set elements, security level requirements, variables, operations, and operational logic.
The system 800 may also include a communication interface 850 that enables communication with other devices via a communication channel. The communication interface 850 may include, but is not limited to a transceiver configured to transmit and receive data from the communication channel. The communication interface 850 may include, but is not limited to, a modem or network card and the communication channel 850 may be implemented within a wired and/or wireless medium. The various components of the system 800 may be connected or communicatively coupled together (not shown) using various suitable connections, including, but not limited to internal buses, wires, and printed circuit boards.
The system 800 also includes user interactions means 830 coupled to the processor for receiving user inputs.
The exemplary embodiments may be carried out by computer software implemented by the processor 810 or by hardware, or by a combination of hardware and software. As a non-limiting example, the exemplary embodiments may be implemented by one or more integrated circuits. The memory 820 may be of any type appropriate to the technical environment and may be implemented using any appropriate data storage technology, such as optical memory devices, magnetic memory devices, semiconductor-based memory devices, fixed memory, and removable memory, as non-limiting examples. The processor 810 may be of any type appropriate to the technical environment, and may encompass one or more of microprocessors, general purpose computers, special purpose computers, and processors based on a multi-core architecture, as non-limiting examples.
The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

According to the disclosed principle, a user interface authentication set is created by a user that selects authentication elements. Advantageously, the user interface authentication set not only comprises mandatory authentication element for validating a user authentication, but also failure authentication elements and neutral authentication elements. Such failure and neutral authentication elements help to improve the security of the user authentication. It is thus more difficult to spy on a user when the user authenticates on a device as the spy cannot know for instance the true length of the password when neutral authentication elements are used by the user when authenticating. Furthermore, when a fraudster attempts to reproduce the user authentication, failure authentication elements help improving user authentication security by triggering rejection of the user authentication.

According to another aspect of the present principle, a method for authenticating a user using at least one user interface authentication set is disclosed. The user interface authentication set comprises at least one mandatory authentication element, and at least one of a failure authentication element or a neutral authentication element. The method comprises:
- receiving user inputs selecting authentication elements among authentication elements presented to a user,
- triggering failure of user authentication or validating user authentication, responsive to received authentication elements.

According to an embodiment of the present principle, triggering failure or validating user authentication is based on a number of failure authentication elements received and/or a number of mandatory authentication elements received.

According to a variant of this embodiment, triggering failure of user authentication or validating user authentication responsive to received authentication elements triggers
- a failure of user authentication when a number of selected authentication element being failure authentication element for user authentication is above a predetermined threshold,
- a validation of user authentication when a number of selected authentication elements being mandatory authentication elements is above or equals to another predetermined threshold.

According to a variant, failure of user authentication may also be triggered when a number of selected authentication elements being mandatory authentication elements is below the other predetermined threshold.

According to an embodiment of the present principle, triggering failure or validating user authentication is based on a tolerance-to-error value depending on a number of failure authentication elements received and a number of mandatory authentication elements received. According to this embodiment, triggering failure of user authentication or validating user authentication responsive to received authentication elements triggers
- a failure of user authentication when the tolerance-to-error value is above or equals a predetermined threshold,
- a validation of user authentication when the tolerance-to-error value is below the predetermined threshold.

According to an embodiment of the present principle, an authentication element corresponds to a media element or to a localization area in a media element.

According to another embodiment of the present principle, an authentication element corresponds to a localization area in a media element, and the localization area comprises at least one of a spatial location in said media element or a time location in said media element. According to this embodiment, password security is improved by using localization area in a media element as mandatory authentication element, or failure authentication element. Therefore, a fraudster would have to not only select the correct media elements for user authentication but also to select correct localization area in these media elements for user authentication success.

According to another embodiment of the present principle, an authentication element corresponds to a media element, and said media element is chosen among at least one image, at least one video, and at least one sound arrangement. According to this embodiment, password security is improved by using different kinds of media elements in the user authentication set.

According to another embodiment of the present principle, said user authentication set comprises at least two mandatory authentication elements, and wherein said method further comprises arranging said mandatory authentication elements in a mandatory order.

According to another embodiment of the present principle, authentication elements are presented to a user in a presentation mode adapted in function of a type of the device used for determining the user interface authentication set or used for authentication. According to the embodiment, as the methods may be performed on any devices having different screen sizes and user input means, presentation of the media elements is adapted so that the media elements are presented in a suitable manner allowing easy and comfortable selection by the user.

According to another embodiment of the present principle, said at least one user interface authentication set is associated to at least two security level sets defining different requirements on authentication elements selection of the user interface authentication set, said method comprises determining a security level set to apply to the user interface authentication set, and validating user authentication further comprises verifying if said selection of authentication elements corresponding to authentication elements in said user interface authentication set satisfies said selected security level set. According to this embodiment, it is thus possible to define different security levels to apply to a same user interface authentication set. Therefore, password security may be adapted according to the context in which user authentication is performed.

According to another embodiment of the present principle, said security level set is determined as a function of a device used for user authentication.

According to another aspect of the present principle, an apparatus for determining at least one user interface authentication set is disclosed. Such an apparatus comprises:
- means for receiving user inputs for selecting at least one authentication element to add to said at least one user interface authentication set,
- means for determining whether said at least one authentication element selected is a mandatory authentication element for validating a user authentication, or whether said at least one authentication element is a failure authentication element triggering failure of user authentication when said at least one authentication element is selected by a user during user authentication, or whether said at least one authentication element is a neutral authentication element being inconsequential to user authentication when said at least one authentication element is selected by a user during user authentication,
- means for adding said at least one authentication element selected to said at least one user interface authentication set.

According to another aspect of the present principle, an apparatus for authenticating a user using at least one user interface authentication set, comprising at least one mandatory authentication element, and at least one of a failure authentication element or a neutral authentication element. Such an apparatus comprises:
- means for receiving user inputs selecting authentication elements among authentication elements presented to a user,
- means for triggering failure of user authentication and means for validating user authentication, responsive to received authentication elements.

According to an embodiment, the above disclosed apparatuses may be comprised in a video receiver, a mobile phone, a tablet, a virtual reality head-mounted display system, or a smartwatch.

One or more of the present embodiments also provide a computer readable storage medium having stored thereon instructions for determining a user interface authentication set and/or for authenticating a user using the user interface authentication set, according to any one of the methods described above. The present embodiments also provide a computer program product including instructions for performing any one of the methods described.

## Claims

1. A method for determining at least one user interface authentication set, said method being performed by at least one processor, said method comprising:
- receiving (20) user input for selecting at least one authentication element to add to said at least one user interface authentication set,
- determining (21) whether said at least one authentication element selected is a mandatory authentication element for validating a user authentication, or whether said at least one authentication element is a failure authentication element triggering failure of user authentication when said at least one authentication element is selected by a user during user authentication, or whether said at least one authentication element is a neutral authentication element being inconsequential to user authentication when said at least one authentication element is selected by a user during user authentication,
- adding (22) said at least one authentication element selected to said at least one user interface authentication set.

2. A method for authenticating a user using at least one user interface authentication set, said at least one user interface authentication set comprising at least one mandatory authentication element, and at least one of a failure authentication element or a neutral authentication element being inconsequential to user authentication, said method being performed by at least one processor, said method comprising:
- receiving (31) user input selecting authentication elements among authentication elements presented to a user,
- triggering failure of user authentication, or validating user authentication responsive to received authentication elements.

3. An apparatus for determining at least one user interface authentication set, said apparatus comprising:
- means for receiving user inputs (830) for selecting at least one authentication element to add to said at least one user interface authentication set,
- means for determining (810, 820) whether said at least one authentication element selected is a mandatory authentication element for validating a user authentication, or whether said at least one authentication element is a failure authentication element triggering failure of user authentication when said at least one authentication element is selected by a user during user authentication, or whether said at least one authentication element is a neutral authentication element being inconsequential to user authentication when said at least one authentication element is selected by a user during user authentication,
- means for adding (810, 820) said at least one authentication element selected to said at least one user interface authentication set.

4. An apparatus for authenticating a user using at least one user interface authentication set, said at least one user interface authentication set comprising at least one mandatory authentication element, and at least one of a failure authentication element or a neutral authentication element, said apparatus comprising:
- means for receiving user inputs (830) selecting authentication elements among authentication elements presented to a user,
- means for triggering (810, 820) failure of user authentication and means for validating (810, 820) user authentication responsive to received authentication elements.

5. The method according to claim 2 or the apparatus according to claim 4, wherein triggering failure or validating user authentication is based on a number of failure authentication elements received and/or a number of mandatory authentication elements received.

6. The method according to any one of claims 1 or 2 or the apparatus according to any one of claims 3 or 4, wherein an authentication element corresponds to a media element or to a localization area in a media element.

7. The method or the apparatus according to claim 6, wherein an authentication element corresponds to a localization area in a media element, and wherein said localization area comprises at least one of a spatial location in said media element or a time location in said media element.

8. The method or the apparatus according to claim 6, wherein an authentication element corresponds to a media element, and wherein said media element is chosen among at least one image, at least one video, and at least one sound arrangement.

9. The method according to any one of claims 1 or 2 or the apparatus according to any one of claims 3 or 4, wherein said user authentication set comprises at least two mandatory authentication elements arranged in a mandatory order.

10. The method or the apparatus according to any one of claims 1 or 2 or the apparatus according to any one of claims 3 or 4, wherein authentication elements are presented to a user in a presentation mode adapted in function of a type of the device used for determining the user interface authentication set or used for authentication.

11. The method or the apparatus according to any one of claims 2, 4-10, wherein said at least one user interface authentication set is associated to at least two security level sets defining different requirements on authentication elements selection of the user interface authentication set,
and wherein said method comprises or said apparatus is configured for determining a security level set to apply to the user interface authentication set,
and wherein validating user authentication further comprises verifying if said selection of authentication elements corresponding to authentication elements in said user interface authentication set satisfies said selected security level set.

12. The method or the apparatus according to claim 11, wherein said security level set is determined as a function of a device used for user authentication.

13. The method or the apparatus according to claim 2 or 4, further comprising outputting an authentication signal when user authentication is validated.

14. An apparatus according to claim 3 or 4, said apparatus being chosen among a video receiver, a mobile phone, a tablet, a virtual reality head-mounted display system, or a smartwatch.

15. A computer program comprising software code instructions for performing the method according to any one of claims 1, or 2, or 5-11, when the computer program is executed by a processor.
